# EUROPEAN PATENT APPLICATION

(11) **EP 3 640 471 A1**
(43) Date of publication of application: **22.04.2020**
(21) Application number: 19213854.3
(22) Date of filing: 19.07.2018
(51) Int. Cl.: F03B 13/18

(54) **ENERGY CONVERSION PLANT**

(30) Priority: 21.07.2017 IT 201700083622; 18.07.2018 IT 201800007300
(62) Divisional of application: 18184349.1
(71) Applicant: Kuma Energy S.R.L., 16128 Genova (IT)
(72) Inventor: FASCE, Marco, I-16043 CHIAVARI (Genova) (IT); PIATTONI, Fabio, I-16157 GENOVA (IT)
(74) Representative: Lunati & Mazzoni S.r.L.

(57) **Abstract**

An energy conversion plant (1) adapted to interact with sea water (10) is provided for defining a wave motion comprising a plurality of wave crests (11) and wavebands (12), in which the plant (1) comprises an actuator (2) operatively interacting with the sea water (10), defining a movement axis (2a) and adapted to be moved along the movement axis (2a) and adapted to be moved along said movement axis (2a) proportionally to said wave motion of said sea water (10), a tank (3) designed to contain a fluid (30), a pump (4) in fluidic through connection with the tank (3), operatively connected to the actuator (2) and defining an extreme charge configuration in which the actuator (2) detects one wave trough (12) and the pump (4) charges the fluid (30) in its interior, and an extreme discharge configuration in which said actuator (2) detects one wave crest (11) and the pump (4) discharges the fluid (30) towards the outside, generating means (5) in fluidic through connection with the pump (4) and activated by means of the fluid (30) moved by said pump (4), and a hydraulic network (6) adapted to place the pump (4) in fluidic through connection with the tank (3) and the pump (4) in fluidic through connection with the generating means (5), the tank (3), the pump (4) and the hydraulic network (6) constituting a fluid-tight environment and not in direct contact with said sea water (10), wherein the hydraulic network (6) places the generating means (5) in fluidic through connection with the tank (3) realizing a closed circuit for the fluid (30), and the tank (3) is in fluidic through connection with an external water network (7) adapted to supply the tank (3) with the fluid (30).

## Description

This invention relates to an energy conversion plant of the type specified in the preamble of the first claim.

In particular, this invention relates to an energy conversion plant designed to store energy from the wave motion of the sea or oceans.

As is known, the movement of the free surface of seas and oceans is often affected by low-frequency phenomena such as tides and higher-frequency phenomena such as wave motion.

Currently, the wave motion of the sea is used to generate energy, typically electrical, through systems known as "Oscillating Water Columns" integrated within fringe-barriers.

An example of a system known in the current state of the art is described in patent EP2029889B1.

It describes a system of producing electricity from the movement of the waves comprising an open sea dam; a submerged portion including a plurality of ducts, of the non-return valves installed on the ducts, a turbine fed by the ducts and means of pumping to the inside which a piston follows at sea level in such a way as to pump sea water alternately into separate ducts.

The patent also has other configurations in which the mechanism for moving the piston through the cylinder involves pumping sea water inside the ducts themselves. The technique described above has some significant drawbacks.

In particular, all the plants available in the current state of the art have at least one portion, and generally the pumping means, in contact with sea water.

As is known, sea water, in contact with metal surfaces, has a high corrosive impact and, therefore, the plants in the current state of the art are subject to wear and tear.

Consequently, the longevity and efficiency of the above-mentioned systems is severely limited, unless punctual, constant and expensive maintenance cycles are put in place.

The said systems have, in conclusion, the drawback of being expensive.

In this situation, the technical task underlying this patent is to devise an energy conversion plant capable of substantially obviating at least some of the aforementioned drawbacks.

Within the scope of this technical task, it is an important aim of the invention to obtain an energy conversion plant which is able to reduce the wear of its components typically caused by salt water.

Another important aim of the invention is therefore to provide an energy conversion plant whose maintenance and costs are limited.

The technical task and the objects specified are achieved by an energy conversion plant as claimed in the annexed claim 1. Preferred examples are described in the dependent claims.

The characteristics and the advantages of the invention are hereafter clarified by the detailed description of preferred executions of the invention, with reference to the attached drawings, in which:
**Fig. 1** shows a diagram of the energy conversion plant with a single pump according to the invention;
**Fig. 2** illustrates a scheme of the energy conversion plant with multiple pumps according to the invention;
**Fig. 3a** provides a top view in section of an electromagnetic actuator of the energy conversion plant according to the invention; and
**Fig. 3b** represents a scheme of the energy conversion plant according to the invention with an electromagnetic actuator.

In this document, measurements, values, shapes and geometric references (such as perpendicularity and parallelism), when associated with words such as "roughly/about" or other similar terms such as "almost" or "substantially", are to be understood to a lesser extent as measurement errors or inaccuracies due to production and/or manufacturing errors and, above all, less as a slight divergence from the value, measurement, geometric shape or reference to which it is associated. For example, these terms, if associated with a value, ideally indicate a divergence of no more than 10% of the value.

Moreover, when used, terms such as "first", "second", "higher/upper", "lower", "primary" and "secondary" do not necessarily identify an order, a relationship priority or relative position, but can simply be used to more clearly distinguish between their different components.

The measurements and data reported in this text are to be considered, unless otherwise indicated, as performed in ICAO International Standard Atmosphere (ISO 2533).

With reference to the Figures, the energy conversion plant according to the invention is indicated by the number **1.**

The energy conversion plant 1 is suitable for interacting with sea water **10.**

Thus, for example, the energy conversion plant is included within a breakwater structure **8.**

This structure 8 is a breakwater barrier or a dam of the type known in the current state of the art.

Sea water 10 generally includes salt water and can be effectively considered as water of seas as well as oceans.

Sea water 10 defines or can define a wave motion.

This wave motion comprises a plurality of wave crests **11** and wavebands **12.**

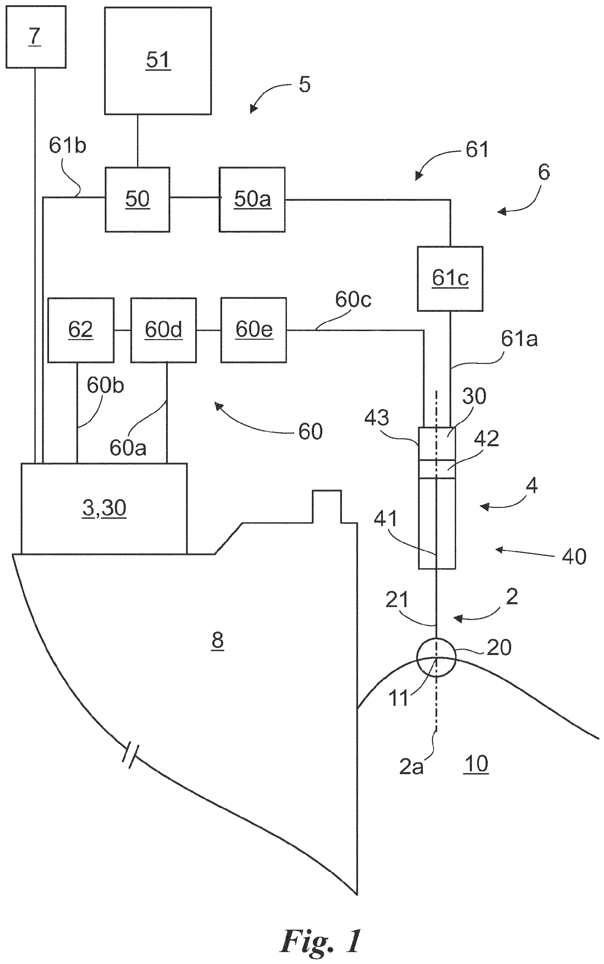

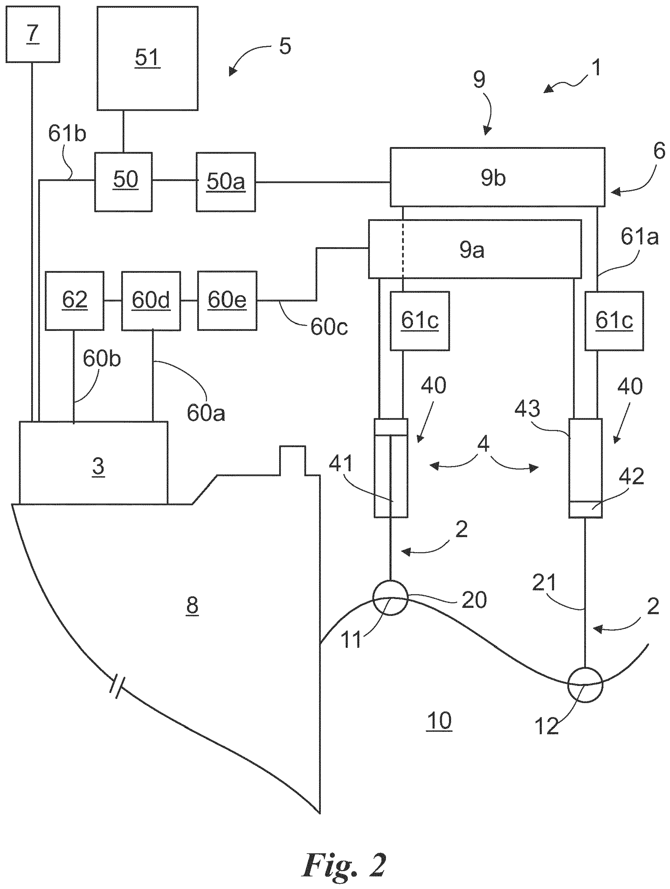

The wave motion of seawater 10 is a three-dimensional motion which, however, can be schematised in two-dimensional waves (Figures 1 and 2) in which, therefore, the wave crests 11 represent the highest peak of the wave, while the wavebands 12 represent the lowest peak.

The plant 1 can be created according to different construction principles. For example, it can be hydraulic or electromagnetic or other. Moreover, ideally, plant 1 can provide for the overlap of the hydraulic plant 1 with an electromagnetic plant 1. Essentially, plant 1 ideally comprises an actuator **2** and generating systems **5**.

In addition, plant 1 exclusively in a hydraulic configuration ideally comprises a reservoir **3,** a pump **4,** and a hydraulic network **6,** while plant 1 exclusively in an electromagnetic configuration ideally also comprises supply means **13,** an electrical network **14** and, possibly, second accumulation means **15.**

On the other hand, if plant 1 provides for the coupling of the hydraulic system with the electromagnetic system, all the above components may be present and the actuator 2 may be of hybrid type and comprise both the hydraulic and the electromagnetic parts, as outlined below.

In any case, actuator 2 is operationally interacting with the aforementioned sea water 10.

Ideally, actuator 2 defines a movement axis **2a.** This movement axis 2a represents the direction of movement of at least a part of the actuator 2.

In particular, the actuator 2 is adapted to be moved along the movement axis 2a proportionally to the wave motion of the sea water.

Therefore, when a wave crest 11 laps the actuator 2, the latter is pushed upwards, with respect to the direction defined by the gravitational acceleration, whereas when a waveband 12 laps the actuator 2 it translates it in agreement with the gravitational acceleration vector.

Moreover, in hydraulic configuration, the actuator 2 is operatively connected to the pump 4 and in electromagnetic configuration it is operatively connected to the supply means 13.

Actuator 2, in detail, includes a float **20** and mechanical connections **21.**

The float 20 is ideally an element defining a predetermined specific volume and weight. It is ideally made of a seawater-resistant material 10 and can therefore be made of stainless steel, titanium or synthetic-related materials. Ideally, the float 20 is substantially a hollow casing which is able to be partially immersed within the sea water in such a way as to be subjected to an Archimedes thrust proportional to the volume of immersed float 20.

From this consideration it emerges that, if the float 20 is removable, it is possible to vary the thrust received from the sea water 10 according to the volumetric dimensions of the float.

The float 20 can also be of the inflatable type and can consist of materials suitable to be placed under pressure and depression and to be dilated. Such materials can be polymeric membranes or other.

The mechanical connections 21 are instead physical elements, ideally rigid, suitable for connecting the float 20 to the pump 4 and/or to the supply means 13. Therefore, the mechanical connections 21 are the means by which the actuator 2 and the pump 4 and/or the supply means 13 are connected.

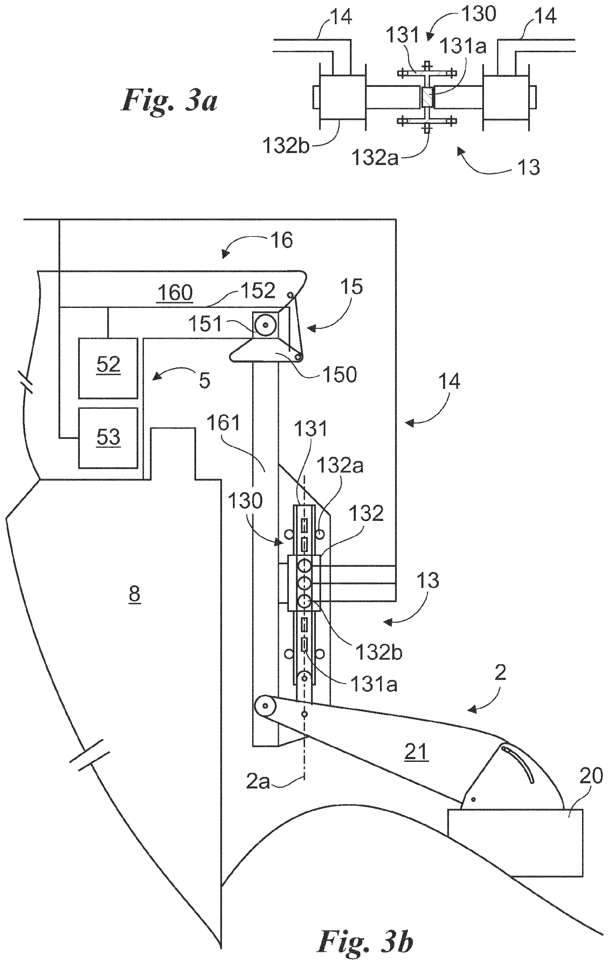

The mechanical connections 21 may comprise a simple rigid connecting rod, or may include substantially-connecting rod mechanisms, known in the current state of the art, such as the mechanism shown in Fig. 3b.

The pump 4 is ideally a hydraulic pump of a known type and, therefore, substantially consists of a fluid-operated volumetric pump.

Ideally, the pump 4 consists of a hydraulic actuator **40.**

The hydraulic actuator 40 is an actuator, for example, of the linear type and therefore it is adapted to move a fluid **30** internally along directions parallel to the movement axis 2a.

The hydraulic actuator 40 therefore comprises a stem **41,** a piston **42** and a containment casing **43.**

The stem 41 is a rod member operatively connected to the float 20.

Ideally, the stem 41 is constrained to the float 20. In more detail, the stem 41 is constrained to the float 20 by means of the mechanical connections 21.

The stem 41 is therefore constrained to the float 20 so as to be moved proportionally to the wave motion of the sea water 10.

Moreover, ideally, the stem 41 also moves along the movement axis 2a.

The piston 42 is connected and moved by the stem 41 and can assume variable shapes and dimensions depending on the containment casing 43.

The containment casing 43 therefore contains at least part of the stem 41 and the piston 42, as well as the fluid 30 adapted to transit inside the pump 4.

Ideally the casing 43, and therefore also the piston 42, has a cylindrical shape, but may have different shapes.

The containment casing 43 constitutes the stroke of the piston 42 and is adapted to hermetically contain part of the fluid inside the pump 4, and the piston 42 is adapted to interact with the contained fluid 30.

In particular, the pump 4 is operatively connected, as mentioned, to the actuator 2 and defines an extreme loading configuration and an extreme unloading configuration.

In the extreme loading configuration, the actuator 2 detects one of the wavebands and the pump 4 charges the fluid 30 inside it.

This situation occurs because the float 20 is pushed downwards by its weight and by the fluid 30 entering the pump 4 and follows the waveband 12, moving downwards in accordance with the gravitational acceleration. Therefore the piston 42 is also lowered and more and more fluid 30 enters into the containment casing 43.

In the extreme unloading configuration, the actuator 2 detects one of the wave crests 11 and the pump 4 discharges the fluid 30 outwards.

The float 20, in this case, is pushed upwards thanks to the Archimedes thrust provided by the wave crest 11 to the float. The piston moves along the movement axis 2a upwards and the volume of fluid 30 inside the containment casing 43 is reduced until it is cancelled.

The aforementioned configurations are defined as extreme because they depend on the dimensions of the containment casing 43 and, in particular, on the effective travel granted to the piston 42. However, between the extreme loading and unloading configurations there may be intermediate loading and unloading configurations.

Such configurations may occur when the distance between wave crest 11 and wave crest 12 is smaller than the effective travel of the piston 42 within the containment casing 43.

The supply means 13 are ideally adapted to generate electrical energy. Ideally, the supply means 13 are adapted to convert the mechanical energy coming from the actuator 2 into electrical energy.

Ideally, the supply means 13 comprise at least one electromagnetic actuator **130.**

The electromagnetic actuator 130 is a linear actuator, for example, inside which a body is moved relative to a fixed portion along directions parallel to the movement axis 2a.

The electromagnetic actuator 130 therefore comprises a cursor **131** and a fixed station **132.**

The cursor 131 is a rod element operatively connected to the float 20.

Ideally, the cursor 131 is also constrained to the float 20. In more detail, the cursor 131 is constrained to the float 20 by means of the mechanical connections 21.

The cursor 131 can therefore be connected to the float together with the stem 41, or alternatively with the stem 41.

The cursor 131 is therefore constrained to the float 20 so as to be moved proportionally to the wave motion of the sea water 10.

Moreover, ideally, the cursor 131 also moves along the movement axis 2a.

The cursor 131 ideally comprises at least one magnetic portion **131a.**

The magnetic portion 131a may be a part of the cursor 131, or it may be incorporated within the cursor 131.

Moreover, it may be extended along the whole of the cursor 131, in particular parallel to the moving axis 2a, or the cursor 131 may comprise a plurality of magnetic portions 131a, for example evenly spaced along the movement axis 2a.

Therefore, the magnetic portion or portions 131a are moved by the cursor 131 and move integrally to it and, in particular, proportionally to the wave motion.

The magnetic portions 131a, in general, ideally comprise permanent magnets.

The fixed station 132 can assume variable shapes and dimensions depending on the cursor 131.

The fixed station 132 therefore contains at least part of the cursor 131 and makes a substantially sleeve-like structure with it. Moreover, the fixed station 132 is ideally constrained to the breakwater structure 8 by means of a support structure **16.**

The support structure 16 is substantially adapted to connect the breakwater structure 8 to the supply means 13. The same support structure 16 can be adapted to connect the pump 4 to the breakwater structure 8.

In detail, the support structure 16 can comprise a frame **160** and a support shaft **161.**

The frame 160 can be any supporting structure suitable for allowing the structural support of at least part of the components of the plant 1. For example, the frame 160 can directly support the pump 4, the whole hydraulic system 6 and comprise the reservoir 3 and the generating means 5 themselves. An example of this type is not explicitly reported in the Figs. as it is known or obvious to the current state of the art.

As regards the connection with a plant 1 comprising an electromagnetic actuator 130, the frame 160 is easily constrained to the support shaft 161 which, in turn, is constrained to the fixed station 132.

The fixed station 132 is, therefore, ideally integral with the support shaft 161.

The support shaft 161 is substantially a longitudinal element, for example a bar or a cylinder, horizontally constrained to a portion of the frame 160, as clearly shown in Fig. 3b, so as to allow the shaft 161 to rotate at least around an axis relative to the frame 160.

Ideally, the connection between the shaft 161 and the frame 160 is achieved by the storage means 15.

The storage means 15 therefore comprise an storage device **150,** a mechanical connection **151** and an electrical connection **152.**

The storage device 150 is ideally adapted to react to the relative displacements between the shaft 161 and the frame 160 in such a way as to generate electrical energy proportionally to said displacements. Ideally, the storage device 150 comprises one or more piezoelectric elements and, in particular, such piezoelectric elements may be plates or other mechanical connectors adapted to deform when the shaft is moving in such a way as to generate electrical energy.

The mechanical connection 151 can simply comprise a hinge adapted to allow movement between the frame 160 and the shaft 161 around a single axis, as already mentioned. Ideally, the storage device 150 is arranged at said mechanical connection 151 so as to instantly capture any relative movement between the frame 160 and the shaft 161.

The electrical connection 152, on the other hand, operatively connects the storage device 150 to the generating means 5. In this way, the electrical energy generated by the storage device 150 can be used to feed part of the generating means 5. Alternatively or in parallel, the electrical connection 152 directly connects the electrical network 14 and the storage device 150.

Therefore, the storage means 15 are ideally operatively connected to the electrical network and/or to the generating means 5.

In addition, the storage means 15 could be arranged upstream of the pump 4, in the hydraulic system, so as to allow the detection of the relative movements between the pump 4 and the supporting structure of the pump itself. For example, in particular, a piezoelectric plate could be installed between the containment casing 43 and the structure to which the casing is constrained.

The fixed station 132 is therefore ideally integral with the support shaft 161 and can also rotate with respect to the frame 160 and, therefore, to the breakwater structure. The fixed station 132 binds the cursor 131 in such a way that the latter can create its own stroke. In this regard, the fixed station 132 comprises guide means **132a.**

The guide means 132a are means which labially constrain the cursor 131 in such a way as to only allow it a controlled translation along the movement axis 2a.

Ideally they comprise a plurality of rollers arranged, for example, in at least two parts of the fixed station 132 mutually spaced along the movement axis 2a, as shown in Figs. 3a-3b.

Moreover, the fixed station 132 may comprise one or more stops to prevent the cursor 131 from emerging from the site defined by the guide means 132a.

Overall, the guide means 132a substantially and ideally define the maximum travel of the cursor 131.

The latter is operatively connected, as mentioned, to the actuator 2 and defines an extreme loading configuration and an extreme unloading configuration.

In the extreme loading configuration, the actuator 2 senses one of the wavebands and the cursor 131 moves downwards. This situation occurs because the float 20 is pushed downwards by its weight and by the fluid 30 entering the pump 4, and follows the waveband 12, moving downwards in accordance with the gravitational acceleration. Therefore, the cursor 131 is also lowered by making a movement along the movement axis 2a with respect to the fixed station 132.

In the extreme unloading configuration, the actuator 2 detects one of the wave crests 11 and the cursor 131 moves upwards.

The float 20, in this case, is pushed upwards thanks to the Archimedes thrust provided by the wave crest 11 to the float 20. The cursor 131 moves along the movement axis 2a upwards, making a movement along the movement axis 2a substantially opposite to the previous one.

The aforementioned configurations are defined as extreme because they depend on the travel granted by the guide means 132a and, in particular, on the actual travel granted to the cursor 131. However, between the extreme loading and unloading configurations there may be intermediate loading and unloading configurations.

Such configurations may occur when the distance between wave crest 11 and waveband 12 is smaller than the actual travel of the cursor 131 within the fixed station 132.

The fixed station 132 therefore comprises the induction means **132b.**

The induction means 132b are ideally means for capturing the movement of the cursor 131 and, in detail, of the magnetic portions 131a, so as to convert the displacements deriving from such motion into electrical energy.

Therefore, substantially, the induction means 132b produce electrical energy proportionally to the wave motion of the water 10.

A solution of this type could be given by dynamo systems known in the current state of the art. However, without excluding the latter, ideally the induction means 132b comprise one or more electric coils.

The electric coils are suitable for detecting the movement of the magnetic portions 131a in such a way as to provide electrical power in the form of induced current by exploiting the principles of electric induction known in the current state of the art.

As is known, a magnetic field in relative motion with respect to an electrical circuit gives rise to an induced current and therefore generates electrical energy.

Therefore, the electromagnetic actuator 130 generates electrical energy due to the effect of electromagnetic induction when the cursor 131 and the fixed station 132 are moved reciprocally.

In detail, the extreme or intermediate movements of the cursor 131 with respect to the fixed station 132 along the movement axis 2a allow electrical energy to be produced due to the effect of the electromagnetic induction.

Therefore, the supply means 13 are ideally adapted to supply the generating means 5 by converting the mechanical energy of the actuator 2 into electrical energy to be allocated to these generating means 5.

The magnetic portions 131a of the cursor 131 are ideally more extensive than the fixed station 132 and, in particular, extend along the entire travel between the guide means 132a in such a way as to always be interacting with the induction means 132b.

As anticipated, ideally, the supply means 13, in particular the induction means 132b, are operatively connected to the electrical network 14.

The electrical network 14, in turn, is ideally operatively connected to the generating means 5 in such a way as to provide at least one closed electrical circuit with the induction means 132b.

In this manner, when the supply means 13 generate electrical energy, this flows into the electrical network 14 in such a way as to reach the generating means 5.

The electrical network 14 can, however, simply be connected to external electrical apparatuses and, therefore, can be adapted to allow the supply means 13 to directly feed the external elements in an electrical manner.

The generating means 5 ideally comprise an accumulator **52** and a motor **53.**

The accumulator 52, if present, is ideally operatively connected to the supply means 13 and/or to the storage means 15.

In particular, the supply means 13 can be operatively connected to the accumulator 52 by means of the electrical network 14, and the storage means 15 can be operatively connected to the accumulator by direct means of the electrical connection 152 or of the electrical network 14 itself.

The accumulator 52 can allow the accumulation of electrical energy whenever the feeding means 13 and/or the storage means 15 are activated.

The accumulation can take place both in an electromagnetic-type plant 1, that is, not including the pump 4 and all the elements connected to it, or it can also occur in a hybrid plant 1 parallel to the operation of the hydraulic part.

The motor 53 is, however, an electric type, ideally also supplied by the feeding means 13 and/or by the storage means 15 and/or by the accumulator 52 itself.

In particular, the motor 53 is operatively connected to each of the aforesaid components by means of the electrical network 14.

The engine 53 is therefore ideally adapted to move the actuator 2 in such a way as to place the plant 1 in safety, for example when it is in rough seas.

The actuator 2 may then be allowed to sink beneath the free surface or sea waves, or it may be spaced away from them in such a way as to not interact with them.

In any case, the motor 53 and the accumulator 52 can also, in turn, be connected to external elements or devices in such a way as to supply them.

If the plant 1 is hybrid, hydraulic and electromagnetic, or if it is exclusively hydraulic, it also includes the reservoir 3.

The reservoir 3 is a tank outside the seawater 10. It can, for example, be constituted by a cistern of a known type and ideally is a tank which is able to contain the fluid 30.

The fluid 30 is ideally a fluid typically used within a hydraulic system and may therefore be water, oil or other.

Ideally the fluid 30 is water. Moreover, the reservoir 3 is ideally in fluid passage connection with an external water network **7.**

The external water network 7 can therefore be a network of a known type, connectable to the reservoir 3 by means of pipes of a known type.

The fluid 30 can then be supplied to the tank directly from the external water supply 7.

In the latter configuration, the generating means 5 are ideally in fluid passage connection with the pump 4 and are activated by means of the fluid 30 moved by the pump 4.

Such generating means 5 ideally comprise a turbine **50** and an electric generator **51,** in particular an alternator.

The turbine 50 is ideally a hydraulic turbine of a known type adapted to be moved through the passage of fluid, for example fluid 30, inside it.

The electric generator 51 is also a generator of a known type, operatively connected to the turbine 50 in such a way as to convert the movement of the turbine 50 into electrical energy.

The plant 1 therefore comprises the hydraulic network 6 suitable for placing the pump 4 and the generating means 5 in fluid passage connection.

Furthermore, the hydraulic network also places the reservoir 3 and the pump 4 in fluid passage connection.

Ideally, therefore, the reservoir 3, the pump 4 and the hydraulic network 6 constitute a sealed environment and are not in direct contact with the sea water 10.

In this way, no portion of the system, with the exception of float 20 and part of the mechanical connections 21, is in contact with the sea water 10.

The reservoir 3, the pump 4 and the generating means 5 are, in order, placed in a fluid passage connection by means of the hydraulic network 6.

The hydraulic network 6 ideally comprises at least one delivery line **60** and one return line **61.**

The delivery line 60 is suitable for connecting the reservoir 3 and the pump 4 and, in particular, is adapted to allow the fluid 30 to pass from the reservoir 3 to the pump 4 when the actuator 2 passes from the extreme unloading configuration to the extreme loading configuration

The return line 61 is adapted to connect the pump 4 and the generating means 5 and, in particular, is adapted to allow the fluid 30 to pass from the pump 4 to the generating means 5 when the actuator 2 passes from the extreme loading configuration to the extreme unloading configuration.

In detail, the return line 61 places the pump 4 in fluid passage connection with the turbine 50.

Therefore the turbine 50 is operatively connected to the return line 61 and fed by the pump 4, and the electric generator 51 is, in turn, supplied by the turbine 50.

The delivery line 60 and the return line 61 furthermore ideally comprise a plurality of elements.

Ideally, the delivery line 60 comprises a first primary line **60a,** a first secondary line **60b** and a first line **60c.**

The first primary line 60a places the reservoir 3 in the fluid passage connection with the first line 60c.

The first secondary line 60b places the tank and the first line 60c in fluid passage connection, but is separated from the first primary line 60a.

In particular, the first primary line 60a and the first secondary line 60b are ideally mutually arranged in parallel.

The term "in parallel" refers to the jargon used in general for networks, whereby two elements placed in parallel are two elements having two end nodes in common.

The first secondary line 60b ideally comprises an auxiliary pump **62.**

This auxiliary pump 62 is a known type of volumetric pump located inside the first secondary line 60b so as to allow, upon request, fluid 30 to be taken from the tank independently of the pump 4.

Finally, the first line 60c places the first primary and secondary lines 60a, 60b and the pump 4 in fluid passage connection.

The connection between the first lines 60a, 60b, 60c can be carried out by means of a first valve **60d.**

The valve 60d is ideally a three-way valve of a known type and is included within the delivery line 60.

Moreover, the first line 60 can comprise, in addition to the first valve 60d, a second valve **60e.**

Ideally, the second valve 60e is a non-return valve arranged within the first line 60c. Therefore it is adapted to allow the fluid 30 to flow in a single direction and ideally exclusively from the reservoir 3 to the pump 4 and not vice versa.

The return line 61 also comprises a second primary line **61a** and a second secondary line **61b.**

The second primary line 61a places the pump 4 and the generating means 5 in fluid passage connection.

The second secondary line 61b places the generating means 5 and the reservoir 3 in fluid passage connection.

Therefore the second secondary line 61b is adapted to reintroduce the fluid 30 inside the reservoir 3 in such a way as to recover it and not to disperse it into the environment.

In this way it is possible to reduce the potential need for fluid from the external water supply 7.

Also the return line 61 can comprise a third valve **61c.**

The third valve 61c is, in particular, arranged on the second primary line 61a and is a non-return valve.

The third valve 61c is also adapted to allow the fluid 30 to flow in a single direction and ideally exclusively from the pump 4 to the generating means 5, in detail the turbine 50, and not vice versa.

The energy conversion plant 1 can therefore be a single pump 4, or a multiple pump 4.

In the second case, ideally, it includes the collectors **9.**

The collectors 9 are adapted to place a plurality of pumps 4 in a fluid passage connection with the hydraulic network 6 and in parallel.

This means that all the pumps 4 cooperate and are connected to the hydraulic network 6 at the same known end.

Therefore the collectors 9 can comprise delivery collectors **9a** and return collectors **9b.**

The delivery collectors 9a are ideally suitable for placing the tank and the pumps 4 in fluid passage connection, while the return collectors 9b are suitable for placing the pumps 4 and the generating means 5 in fluid passage connection.

The operation of the plant 1, previously described in structural terms, is as follows.

The float 20 is moved along the movement axis 2a by the wave motion of the sea water 10. Therefore it allows the pump 4 to alternatively pass from the loading configuration to the unloading configuration and vice versa.

When the pump passes from, for example, the extreme unloading configuration to the extreme loading configuration, the pump 4 draws fluid 30 from the reservoir 3.

The fluid 30 then passes through the first primary line 60a and the first line 60c.

Furthermore, thanks to the second valve 60e, the fluid 30 cannot return to the reservoir 3.

When the pump 4 then passes from, for example, the extreme loading configuration to an extreme unloading configuration, the fluid 30 introduced into the pump 4 is discharged towards the outside of the pump 4.

In particular the fluid 30 flows through the second primary line 61a and, thanks to the third valve 61c, cannot return inside the pump 4.

Therefore the fluid 30 is pushed to the turbine 50 which is supplied by the fluid 30 coming from the pump and, in turn, supplies the electric generator 51.

The fluid 30 exiting the turbine is then collected, through the second secondary line 61b, in the reservoir 3.

In the event that the reservoir 3 is lacking in fluid 30 such as, for example, during the start-up phase, it is possible to introduce fluid through the external water supply 7.

In this case, instead of failures of the plant 1, it is possible to stop the generation of electrical energy through the auxiliary pump 62.

In fact the latter, once started, can draw fluid 30 from the tank and insert it independently inside the pump 4 in such a way as to prevent the piston 42 from rising and, therefore, prevent the pump 4 from supplying the generating means 5.

The auxiliary pump 62 is therefore suitable for blocking the movement of the pump 4 and, in detail, of the float 20.

The energy conversion plant 1 according to the invention achieves important advantages.

In fact, it considerably reduces the wear of the components making up the plant, since the only element in contact with the sea water 10 consists exclusively of the actuator 2.

Therefore, the corrosion effects are extremely limited and well-localised.

This last aspect therefore also allows the time and costs related to the maintenance of the plant to be limited, as it is no longer subject to serious and extensive wear and corrosion due to sea water 10 and, in particular, by the fact of introducing sea water 10 inside the plant 1.

The plant 1 also has the advantage of reusing the fluid 30 thanks to the second secondary line 61 b which places the generating means 5 and the reservoir 3 in fluid passage connection.

Or the system allows an exclusively electrical system to be used in such a way as to reduce any inefficiency due to pressure losses and the decay of the materials inside the hydraulic plants.

The accumulation means, together with the supply means, allow energy to be obtained in any situation. The plant 1, comprising at least one electromagnetic part, can in fact be positioned in coastal areas not affected by particularly large wave motion, as it includes tools for storing electrical energy even in the presence of reduced displacements or deformations.

For example, the presence of the storage means allows an efficient response of the plant 1 to be obtained which is extremely versatile and, therefore, is also effective on platforms or devices located in areas affected by high wave frequencies.

In conclusion, another advantage of the plant is that of allowing the generation of electricity to stop in case of failure of the generation means 5, by means of the auxiliary pump 62.

The invention is susceptible to variants falling within the scope of the inventive concept defined by the claims.

For example, the reservoir 3 may not be in fluid passage connection with an external water supply 7, but connectors may be provided through which the reservoir 3 can be recharged manually with a fluid 30.

Furthermore, it is possible to apply covers to the actuator 2 along the movement axis 2a, so as to completely cover it and make the plant 1 more compatible with the environmental protection constraints. Such covers could be, for example, sheets treated with paints and granules which make the actuator 2 visually homogeneous with the breakwater structure 8.

These plates could also extend, in the case of an electromagnetic plant 1,
to the supply means 13 and at least part of the support structure 16.

In this context all the details can be substituted by equivalent elements and the materials, the shapes and the dimensions can be any.

## Claims

1. An energy conversion plant (1) adapted to interact with sea water (10),
- said sea water (10) defining a wave motion comprising a plurality of wave crests (11) and wave troughs (12),
- and said plant (1) comprising:
- an actuator (2) operatively interacting with said sea water (10), defining a movement axis (2a) and adapted to be moved along said movement axis (2a) proportionally to said wave motion of said sea water (10),
- a tank (3) designed to contain a fluid (30),
- a pump (4) in fluidic through connection with said tank (3), operatively connected to said actuator (2) and defining:
- an extreme charge configuration in which said actuator (2) detects one of said wave troughs (12) and said pump (4) charges said fluid (30) in its interior, and
- an extreme discharge configuration in which said actuator (2) detects one of said wave crests (11) and said pump (4) discharges said fluid (30) towards the outside,
- generating means (5) in fluidic through connection with said pump (4) and activated by means of said fluid (30) moved by said pump (4), and
- a hydraulic network (6) adapted to place said pump (4) in fluidic through connection with said tank (3) and said pump (4) in fluidic through connection with said generating means (5),
- said tank (3), said pump (4) and said hydraulic network (6) constituting a fluid-tight environment and not in direct contact with said sea water (10)
and said plant (1) being **characterised in that**
- said hydraulic network (6) places said generating means (5) in fluidic through connection with said tank (3) realizing a closed circuit for said fluid (30), and
- said tank (3) is in fluidic through connection with an external water network (7) adapted to supply said tank (3) with said fluid (30).

2. The plant (1) according to claim 1, wherein said actuator (2) comprises a float (20) and said pump (4) is a positive-displacement pump comprising a hydraulic actuator (40) including a stem (41), a piston (42) and a containment casing (43), said stem (41) being constrained to said float (20) so as to be moved proportionally to said wave motion of said sea water (10), said piston (42) being connected to and moved by said stem (41) and adapted to interact with said fluid (30) inside said containment casing (43) and said containment casing (43) constituting the stroke of said piston (42) and being adapted to hermetically contain part of said fluid (30).

3. The plant (1) according to at least one of the preceding claims, wherein said tank (3), said pump (4) and said generating means (5) are placed in fluidic through connection with each other by means of said hydraulic network (6) comprising at least one feed line (60) adapted to connect said tank (3) and said pump (4) and a return line (61) adapted to connect said pump (4) and said generating means (5), said feed line (60) being adapted to allow said fluid (30) to pass from said tank (3) to said pump (4) when said actuator (2) switches from said extreme discharge configuration to said extreme charge configuration and said return line (61) being adapted to allow said fluid (30) to pass from said pump (4) to said generating means (5) when said actuator (2) switches from said extreme charge configuration to said extreme discharge configuration.

4. The plant (1) according to at least one of the preceding claims, wherein said feed line (60) comprises a first primary line (60a), a first auxiliary line (60b) and a first line (60c), said first primary line (60a) placing said tank (3) in fluidic through connection with said first line (60c), said first auxiliary line (60b) placing said tank (3) in fluidic through connection with said first line (60c) and comprising an auxiliary pump (62), and said first line (60c) placing said first primary and auxiliary lines (60a, 60b) in fluidic through connection with said pump (4).

5. The plant (1) according to at least one of the preceding claims, wherein said return line (61) comprises a second primary line (61a) and a second secondary line (61b), said second primary line (61a) placing said pump (4) in fluidic through connection with said generating means (5), and said second secondary line (61b) placing said generating means (5) in fluidic through connection with said tank (3).

6. The plant (1) according to at least one of the preceding claims, wherein said feed line (60) comprises a first valve (60d) and a second valve (60e), and said return line (61) comprises a third valve (61c), said first valve (60d) being a three-way valve which is suitable to connect said first lines (60a, 60b, 60c), and said second and third valves (61 e, 60c) being non-return valves arranged within said first line (60c) and said second primary line (61a), respectively.

7. The plant (1) according to at least one of the preceding claims, wherein said motor means (5) comprise a turbine (50) and an electric generator (51), said turbine (50) being operatively connected to said return line (61) and supplied by said pump (4), and said electric generator (51) being supplied by said turbine (50).

8. The plant (1) according to at least one of the preceding claims, comprising manifolds (9) suitable for placing a plurality of said pumps (4) in fluidic through connection with said hydraulic network (6) and in parallel.

9. A breakwater structure (8) comprising the plant (1) according to at least one of the preceding claims.
